# EUROPÄISCHE PATENTSCHRIFT

(11) **EP 4 058 310 B1**
(45) Veröffentlichungstag und Bekanntmachung des Hinweises auf die Patenterteilung: **09.08.2023**
(21) Anmeldenummer: 20792943.1
(22) Anmeldetag: 12.10.2020
(51) Int. Cl.: B60G 17/019, B60T 8/18, G01G 19/02, G01G 19/08, B60W 40/13

(54) **LADUNGSERFASSUNGSVORRICHTUNG**
LOAD DETECTION DEVICE
DISPOSITIF DE DÉTECTION DE CHARGE

(30) Priorität: 14.11.2019 DE 102019217592
(43) Veröffentlichungstag der Anmeldung: 21.09.2022
(73) Patentinhaber: ZF Friedrichshafen AG, 88046 Friedrichshafen (DE)
(72) Erfinder: PAPE, Dennis, 49179 Ostercappeln (DE); STRATMANN, Julian, 49152 Bad Essen (DE); WERRIES, Christoph, 49143 Bissendorf (DE); KLANK, Michael, 49084 Osnabrück (DE)
(74) Vertreter: ZF Friedrichshafen AG
(86) Internationale Anmeldenummer: PCT/EP2020/078527
(87) Internationale Veröffentlichungsnummer: WO 2021/094040

(56) Entgegenhaltungen:
- DE-A1-102014 215 440
- DE-A1-102015 015 283
- DE-A1-102015 212 347
- DE-A1-102017 202 178
- US-A1- 2018 052 037
- US-A1- 2019 337 523

## Beschreibung

Die Erfindung betrifft eine Ladungserfassungsvorrichtung mit einer Höhenstand-Messeinheit, mittels welcher der Höhenstand eines Fahrzeugs erfassbar und wenigstens ein den Höhenstand charakterisierendes Höhenstandsignal bereitstellbar ist, und einer mit der Höhenstand-Messeinheit verbundenen Auswerteeinheit, mittels welcher die Masse einer Ladung des Fahrzeugs unter Berücksichtigung des Höhenstandsignals bestimmbar ist und mit einer Lage-Messeinheit, mittels welcher die Lage des Fahrzeugs bezüglich des Erdmittelpunkts erfassbar und wenigstens ein diese Lage charakterisierendes Lagesignal bereitstellbar ist, wobei mittels der Auswerteeinheit, die zusätzlich mit der Lage-Messeinheit verbunden ist, die Masse der Ladung zusätzlich unter Berücksichtigung des Lagesignals bestimmbar ist.

Eine derartige Ladungserfassungsvorrichtung ist aus US 2019/337523 A1 oder US 2018/052037 A1 bekannt.

Die DE 10 2014 215 440 A1 beschreibt ein Verfahren zum Bestimmen des Gesamtgewichts eines Kraftfahrzeugs, das über eine Federung verfügt, die wiederum mindestens ein Federelement umfasst, wobei ein Federweg wenigstens eines des mindestens einen Federelements gemessen wird und anhand dessen das Gesamtgewicht des Kraftfahrzeugs bestimmt wird.

Der Federweg ist ein Maß für den Höhenstand. Wird lediglich der Höhenstand zur Bestimmung der Masse der Ladung genutzt, ergibt sich das Problem, dass ein auf einem horizontalen Untergrund abgestelltes Fahrzeug in der Regel anders einfedert als ein auf einem nicht horizontalen Untergrund abgestelltes Fahrzeug. Zur Ermittlung der Masse der Ladung muss somit das Fahrzeug entweder bewegt oder auf einem horizontalen Untergrund abgestellt und darauf beladen werden.

Ausgehend hiervon liegt der Erfindung die Aufgabe zugrunde, die Masse der Ladung unabhängig von der Beschaffenheit des Untergrunds auch bei stillstehendem Fahrzeug bestimmen zu können.

Diese Aufgabe wird durch eine Ladungserfassungsvorrichtung nach Anspruch 1 und durch ein Verfahren nach Anspruch 6 gelöst. Bevorzugte Weiterbildungen der Erfindung sind in den Unteransprüchen und in der nachfolgenden Beschreibung gegeben.

Eine erfindungsgemäße Ladungserfassungsvorrichtung weist eine Höhenstand-Messeinheit, mittels welcher der Höhenstand eines Fahrzeugs erfassbar und wenigstens ein den Höhenstand charakterisierendes Höhenstandsignal bereitstellbar ist, eine mit der Höhenstand-Messeinheit verbundene Auswerteeinheit, mittels welcher die Masse einer Ladung des Fahrzeugs unter Berücksichtigung und/oder auf Basis des Höhenstandsignals bestimmbar ist, und eine Lage-Messeinheit auf, mittels welcher die Lage des Fahrzeugs bezüglich des Erdmittelpunkts erfassbar und wenigstens ein diese Lage charakterisierendes Lagesignal bereitstellbar ist, wobei mittels der Auswerteeinheit, die, insbesondere zusätzlich, mit der Lage-Messeinheit verbunden ist, die Masse der Ladung, insbesondere zusätzlich, unter Berücksichtigung und/oder auf Basis des Lagesignals bestimmbar ist.

Mit Hilfe des Lagesignals ist der Einfluss der Beschaffenheit des Untergrunds auf den Höhenstand und/oder auf das Höhenstandsignal herausrechenbar und/oder eliminierbar. Insbesondere ist die Bestimmung der Ladung mit einer höheren Genauigkeit möglich und nicht mehr abhängig vom Abstellort des Fahrzeugs. Bevorzugt sind der Höhenstand des Fahrzeugs und die Lage des Fahrzeugs im Stillstand des Fahrzeugs erfassbar. Insbesondere ist ein Bewegen des Fahrzeugs nicht mehr erforderlich.

Das Fahrzeug ist bevorzugt ein Fahrzeug mit Rädern. Vorteilhaft umfasst das Fahrzeug mehrere, beispielsweise vier oder wenigstens vier oder sechs oder wenigstens sechs oder acht oder wenigstens acht, Fahrzeugräder. Bevorzugt umfasst das Fahrzeug mehrere, beispielsweise zwei oder wenigstens zwei oder drei oder wenigstens drei oder vier oder wenigstens vier, Fahrzeugachsen. Jede der Fahrzeugachsen umfasst vorzugsweise zwei oder wenigstens zwei oder mehrere der Fahrzeugräder.

Das Fahrzeug umfasst bevorzugt einen Fahrzeugaufbau. Der Fahrzeugaufbau bildet oder umfasst z.B. eine Karosserie oder einen Fahrzeugrahmen. Vorzugsweise sind die Fahrzeugräder und/oder die Fahrzeugachsen durch Radaufhängungen und/oder durch Achsaufhängungen mit dem Fahrzeugaufbau verbunden. Beispielsweise sind die Fahrzeugräder und/oder die Fahrzeugachsen durch jeweils eine Radaufhängung und/oder durch jeweils eine Achsaufhängung mit dem Fahrzeugaufbau verbunden. Vorteilhaft sind die Fahrzeugräder und/oder die Fahrzeugachsen durch Fahrzeugfedern, vorzugsweise federnd, an dem Fahrzeugaufbau abgestützt und/oder mit diesem verbunden. Beispielsweise sind die Fahrzeugräder und/oder die Fahrzeugachsen durch jeweils eine Fahrzeugfeder oder durch jeweils wenigstens eine Fahrzeugfeder oder durch jeweils mehrere Fahrzeugfedern, vorzugsweise federnd, an dem Fahrzeugaufbau abgestützt und/oder mit diesem verbunden.

Das Fahrzeug ist bevorzugt ein Landfahrzeug. Vorzugsweise ist das Fahrzeug ein Kraftfahrzeug. Insbesondere ist das Fahrzeug ein Straßenfahrzeug oder ein Schienenfahrzeug. Vorteilhaft ist das Fahrzeug ein Personenbeförderungsfahrzeug. Beispielsweise ist das Fahrzeug ein Personenkraftwagen, ein Omnibus oder ein Reisezug. Bevorzugt steht das Fahrzeug, insbesondere mit seinen Fahrzeugrädern, auf dem oder einem Untergrund auf. Vorzugsweise stehen die Fahrzeugräder auf dem oder einem Untergrund auf. Der Untergrund ist oder umfasst z.B. eine Fahrbahn. Beispielsweise ist oder umfasst der Untergrund eine Straße oder ein Gleis.

Gemäß einer Weiterbildung ist oder wird die Lage des Fahrzeugs bezüglich des Erdmittelpunkts durch die Lage einer Fahrzeugebene bezüglich des Erdmittelpunkts gegeben und/oder definiert. Die Fahrzeugebene ist oder wird bevorzugt durch zwei Fahrzeugachsen aufgespannt und/oder definiert, die insbesondere die Fahrzeuglängsachse und die Fahrzeugquerachse sind oder umfassen. Die Fahrzeuglängsachse wird z.B. als x-Achse bezeichnet. Ferner wird die Fahrzeugquerachse z.B. als y-Achse bezeichnet. Insbesondere wird die Fahrzeugebene als x-y-Ebene bezeichnet. Die Lage des Fahrzeugs bezüglich des Erdmittelpunkts ist oder bildet z.B. eine absolute Lage des Fahrzeugs oder der Fahrzeugebene zum Erdmittelpunkt.

Bevorzugt ist mittels der Auswerteeinheit ein die Masse der Ladung charakterisierendes Massesignal erzeugbar und/oder bereitstellbar. Vorzugsweise umfasst die Auswerteeinheit eine Recheneinheit, die insbesondere eine digitale Recheneinheit ist. Beispielsweise umfasst die Auswerteeinheit einen Microkontroller.

Gemäß einer Ausgestaltung umfasst die Lage-Messeinheit ein oder mehrere, beispielsweise zwei oder wenigstens zwei oder drei oder wenigstens drei, Beschleunigungssensoren. Mittels der Beschleunigungssensoren ist insbesondere die Erdbeschleunigung am Ort des oder des jeweiligen Beschleunigungssensors oder der Beschleunigungssensoren erfassbar und/oder messbar. Bevorzugt sind die Beschleunigungssensoren unterschiedlich, beispielsweise senkrecht zueinander, ausgerichtet und/oder orientiert. Vorteilhaft ist einer der Beschleunigungssensoren in Fahrzeuglängsrichtung und ein anderer der Beschleunigungssensoren in Fahrzeugquerrichtung ausgerichtet und/oder orientiert. Die Lage-Messeinheit ist z.B. an einer ungefederten oder an einer gefederten Masse des Fahrzeugs angeordnet. Beispielsweise sind die Beschleunigungssensoren der Lage-Messeinheit an einer ungefederten oder an einer gefederten Masse des Fahrzeugs angeordnet. Die Lage-Messeinheit ist z.B. in Form eines Mikrosystems (MEMS) realisiert. Insbesondere bildet die Lage-Messeinheit eine inertiale Messeinheit. Lage-Messeinheiten werden beispielsweise in mobilen Rechnern (wie z.B. Notebook, Tablet, Mobiltelefon) und in Fernbedienungen für Computerspiele eingesetzt.

Als Höhenstand wird insbesondere der Abstand des Fahrzeugs und/oder des Fahrzeugaufbaus zum Untergrund und/oder zu den Fahrzeugrädern und/oder zu den Fahrzeugachsen, vorzugsweise in Fahrzeughochrichtung, bezeichnet. Beispielsweise ist der Höhenstand durch den Abstand des Fahrzeugaufbaus zu den Fahrzeugrädern und/oder zu den Fahrzeugachsen und/oder zu dem Untergrund, vorzugsweise in Fahrzeughochrichtung, gegeben und/oder charakterisiert. Der Höhenstand ist z.B. durch die Einfederung der Fahrzeugräder und/oder der Fahrzeugachsen gegeben und/oder charakterisiert.

Gemäß einer Weiterbildung umfasst die Höhenstand-Messeinheit einen oder wenigstens einen Höhenstand-Sensor oder mehrere, beispielsweise zwei oder wenigstens zwei oder drei oder wenigstens drei oder vier oder wenigstens vier, Höhenstand-Sensoren. Bevorzugt ist jeder der Höhenstandsensoren einem der Fahrzeugräder und/oder einer der Fahrzeugachsen zugeordnet. Insbesondere ist mit jedem der Höhenstand-Sensoren der Höhenstand im Bereich des ihm zugeordneten Fahrzeugrads und/oder der ihm zugeordneten Fahrzeugachse erfassbar. Beispielsweise ist mit jedem der Höhenstand-Sensoren der Abstand des Fahrzeugaufbaus zu dem ihm zugeordneten Fahrzeugrad und/oder zu der ihm zugeordneten Fahrzeugachse erfassbar. Vorteilhaft ist mit jedem der Höhenstand-Sensoren die Einfederung des ihm zugeordneten Fahrzeugrads und/oder der ihm zugeordneten Fahrzeugachse erfassbar.

Der Höhenstand im Bereich jedes Fahrzeugrads ist insbesondere der Abstand zwischen dem jeweiligen Fahrzeugrad und dem Fahrzeugaufbau, vorzugsweise in Fahrzeughochrichtung. Der Höhenstand im Bereich jeder Fahrzeugachse ist beispielsweise der Abstand zwischen der jeweiligen Fahrzeugachse und dem Fahrzeugaufbau, vorzugsweise in Fahrzeughochrichtung.

Vorzugsweise weist das Fahrzeug mindestens eine Blattfederung auf. Insbesondere ist die Blattfederung zwischen einerseits einem Fahrzeugrad und/oder einer Fahrzeugachse und andererseits einem Fahrzeugaufbau angeordnet. Vorzugsweise ist die Höhenstand-Messeinheit der Blattfederung zugeordnet. Somit kann an einem Fahrzeug mit einer Blattfederung, beispielsweise einem Omnibus mit einer Blattfederung anstelle einer Luftfederung, mittels der Höhenstand-Messeinheit und/oder einem Höhenstandsensor der Abstand des Fahrzeugaufbaus zu dem ihm zugeordneten Fahrzeugrad und/oder zu der ihm zugeordneten Fahrzeugachse erfasst werden.

Erfindungsgemäß besteht die Ladung aus einer oder mehreren Personen.

Eine genaue Erfassung der Personenzahl in einem Personenbeförderungsfahrzeug ist in der Regel nur durch händisches Zählen möglich. Durch den Verkauf von Fahrkarten, insbesondere von Fahrkarten, die nicht einer bestimmten Fahrt zugeordnet und/oder für mehrere Personen vorgesehen sind, ist eine Erfassung der Personenzahl schwierig, da nicht sichergestellt ist, ob und in welchem Umfang die Fahrkarten genutzt werden. Dies betrifft z.B. Gruppenkarten, Monatskarten etc. Zwar könnten Lichtschranken zum Zählen der Personenzahl eingesetzt werden, diese Methode ist aber fehleranfällig, insbesondere wenn Personen gruppenweise in das Fahrzeug einsteigen und dabei eng hintereinander laufen.

Erfindungsgemäß ist mittels der Auswerteeinheit aus der Masse der Ladung und/oder aus der Änderung dieser Masse die Anzahl der Personen bestimmbar. Möglicherweise können Ungenauigkeiten bei der Bestimmung der Anzahl der Personen aufgrund von Gepäck, Kinderwagen, Fahrrädern oder dergleichen auftreten, dennoch ist in der Regel eine ungefähre oder näherungsweise Erfassung der Personenzahl möglich. Vorzugsweise ist mittels der Auswerteeinheit ein die Anzahl der Personen charakterisierendes Personensignal erzeugbar und/oder bereitstellbar.

Erfindungsgemäß ist eine Ortungseinheit vorgesehen, mittels welcher der Ort des Fahrzeugs erfassbar ist. Des Weiteren ist eine Speichereinheit vorgesehen, in der eine Straßenkarte repräsentierende Karteninformationen gespeichert sind. Zudem ist eine Zuordnungseinheit vorgesehen, mittels welcher die Masse der Ladung und/oder die Anzahl der Personen und/oder der Ort des Fahrzeugs mit der Straßenkarte und/oder mit den Karteninformationen verknüpfbar ist oder sind. Somit ist eine Erfassung von stark frequentierten Strecken möglich. Zudem kann per Mobiltelefon angezeigt werden, wie voll das Fahrzeug derzeit ist und ob es sich z.B. in Städten lohnt, auf den nächsten oder die nächste, vielleicht leereren Bus oder U-Bahn zu warten. Um eine Strecke zu entlasten, ist der Einsatz von weiteren Bussen möglich. Die Nutzung öffentlicher Verkehrsmittel wird so attraktiver durch weniger Gedränge. Eine Planung wird einfacher.

Die Zuordnungseinheit ist bevorzugt mit der Speichereinheit und/oder mit der Auswerteeinheit verbunden. Beispielsweise ist die Zuordnungseinheit mit der Auswerteeinheit per Funk verbunden. Vorteilhaft ist die Ortungseinheit mit der Auswerteeinheit und/oder mit der Zuordnungseinheit verbunden.

Die Erfindung betrifft ferner ein Verfahren zur Ladungserfassung des oder eines Fahrzeugs, insbesondere mittels der oder einer erfindungsgemäßen Ladungserfassungsvorrichtung, wobei mittels der oder einer Höhenstand-Messeinheit der Höhenstand des Fahrzeugs erfasst und wenigstens ein den Höhenstand charakterisierendes Höhenstandsignal bereitgestellt wird, unter dessen Berücksichtigung und/oder auf Basis dessen, insbesondere mittels der oder einer Auswerteeinheit, die Masse der oder einer Ladung des Fahrzeugs bestimmt wird, wobei mittels der oder einer Lage-Messeinheit die Lage des Fahrzeugs bezüglich des Erdmittelpunkts erfasst und wenigstens ein diese Lage charakterisierendes Lagesignal bereitgestellt wird, und wobei, insbesondere mittels der Auswerteeinheit, die Masse der Ladung, insbesondere zusätzlich, unter Berücksichtigung und/oder auf Basis des Lagesignals bestimmt wird.

Das Verfahren kann gemäß allen im Zusammenhang mit der Ladungserfassungsvorrichtung beschriebenen Ausgestaltungen weitergebildet werden. Ferner kann die Ladungserfassungsvorrichtung gemäß allen im Zusammenhang mit dem Verfahren beschriebenen Ausgestaltungen weitergebildet sein. Bevorzugt wird, insbesondere mittels der Auswerteeinheit, ein die Masse der Ladung charakterisierendes Massesignal erzeugt und/oder bereitgestellt.

Mit Hilfe des Lagesignals kann der Einfluss der Beschaffenheit des Untergrunds auf den Höhenstand und/oder auf das Höhenstandsignal herausgerechnet und/oder eliminiert werden. Bevorzugt werden der Höhenstand des Fahrzeugs und die Lage des Fahrzeugs im Stillstand des Fahrzeugs erfasst. Vorteilhaft wird die Lage des Fahrzeugs bezüglich des Erdmittelpunkts vor und/oder bei und/oder nach der Beladung des Fahrzeugs mit der Ladung erfasst.

Das Fahrzeug ist bevorzugt ein Fahrzeug mit Rädern. Vorteilhaft umfasst das Fahrzeug mehrere, beispielsweise vier oder wenigstens vier oder sechs oder wenigstens sechs oder acht oder wenigstens acht, Fahrzeugräder. Bevorzugt umfasst das Fahrzeug mehrere, beispielsweise zwei oder wenigstens zwei oder drei oder wenigstens drei oder vier oder wenigstens vier, Fahrzeugachsen. Jede der Fahrzeugachsen umfasst vorzugsweise zwei oder wenigstens zwei oder mehrere der Fahrzeugräder.

Das Fahrzeug umfasst bevorzugt einen Fahrzeugaufbau. Der Fahrzeugaufbau bildet oder umfasst z.B. eine Karosserie oder einen Fahrzeugrahmen. Vorzugsweise sind die Fahrzeugräder und/oder die Fahrzeugachsen durch Radaufhängungen und/oder durch Achsaufhängungen mit dem Fahrzeugaufbau verbunden. Beispielsweise sind die Fahrzeugräder und/oder die Fahrzeugachsen durch jeweils eine Radaufhängung und/oder durch jeweils eine Achsaufhängung mit dem Fahrzeugaufbau verbunden. Vorteilhaft sind die Fahrzeugräder und/oder die Fahrzeugachsen durch Fahrzeugfedern, vorzugsweise federnd, an dem Fahrzeugaufbau abgestützt und/oder mit diesem verbunden. Beispielsweise sind die Fahrzeugräder und/oder die Fahrzeugachsen durch jeweils eine Fahrzeugfeder oder durch jeweils wenigstens eine Fahrzeugfeder oder durch jeweils mehrere Fahrzeugfedern, vorzugsweise federnd, an dem Fahrzeugaufbau abgestützt und/oder mit diesem verbunden.

Das Fahrzeug ist bevorzugt ein Landfahrzeug. Vorzugsweise ist das Fahrzeug ein Kraftfahrzeug. Insbesondere ist das Fahrzeug ein Straßenfahrzeug oder ein Schienenfahrzeug. Vorteilhaft ist das Fahrzeug ein Personenbeförderungsfahrzeug.

Bevorzugt steht das Fahrzeug, insbesondere mit seinen Fahrzeugrädern, auf dem oder einem Untergrund auf. Vorzugsweise stehen die Fahrzeugräder auf dem oder einem Untergrund auf. Der Untergrund ist oder umfasst z.B. eine Fahrbahn. Beispielsweise ist oder umfasst der Untergrund eine Straße oder ein Gleis.

Gemäß einer Weiterbildung ist oder wird die Lage des Fahrzeugs bezüglich des Erdmittelpunkts durch die Lage der oder einer Fahrzeugebene bezüglich des Erdmittelpunkts gegeben und/oder definiert. Die Fahrzeugebene ist oder wird bevorzugt durch zwei Fahrzeugachsen aufgespannt und/oder definiert, die insbesondere die Fahrzeuglängsachse und die Fahrzeugquerachse sind oder umfassen. Die Lage des Fahrzeugs bezüglich des Erdmittelpunkts ist oder bildet z.B. eine absolute Lage des Fahrzeugs oder der Fahrzeugebene zum Erdmittelpunkt.

Gemäß einer Ausgestaltung umfasst die Lage-Messeinheit ein oder mehrere, beispielsweise zwei oder wenigstens zwei oder drei oder wenigstens drei, Beschleunigungssensoren. Mittels der Beschleunigungssensoren wird insbesondere die Erdbeschleunigung am Ort des oder des jeweiligen Beschleunigungssensors oder der Beschleunigungssensoren erfasst und/oder gemessen. Bevorzugt sind die Beschleunigungssensoren unterschiedlich, beispielsweise senkrecht zueinander, ausgerichtet und/oder orientiert. Vorteilhaft ist einer der Beschleunigungssensoren in Fahrzeuglängsrichtung und ein anderer der Beschleunigungssensoren in Fahrzeugquerrichtung ausgerichtet und/oder orientiert. Die Lage-Messeinheit ist z.B. an einer ungefederten oder an einer gefederten Masse des Fahrzeugs angeordnet. Beispielsweise sind die Beschleunigungssensoren der Lage-Messeinheit an einer ungefederten oder an einer gefederten Masse des Fahrzeugs angeordnet. Insbesondere bildet die Lage-Messeinheit eine inertiale Messeinheit.

Als Höhenstand wird insbesondere der Abstand des Fahrzeugs und/oder des Fahrzeugaufbaus zum Untergrund und/oder zu den Fahrzeugrädern und/oder zu den Fahrzeugachsen, vorzugsweise in Fahrzeughochrichtung, bezeichnet. Beispielsweise ist der Höhenstand durch den Abstand des Fahrzeugaufbaus zu den Fahrzeugrädern und/oder zu den Fahrzeugachsen und/oder zu dem Untergrund, vorzugsweise in Fahrzeughochrichtung, gegeben und/oder charakterisiert. Der Höhenstand ist z.B. durch die Einfederung der Fahrzeugräder und/oder der Fahrzeugachsen gegeben und/oder charakterisiert.

Gemäß einer Weiterbildung umfasst die Höhenstand-Messeinheit einen oder wenigstens einen Höhenstand-Sensor oder mehrere, beispielsweise zwei oder wenigstens zwei oder drei oder wenigstens drei oder vier oder wenigstens vier, Höhenstand-sensoren. Bevorzugt ist jeder der Höhenstand-Sensoren einem der Fahrzeugräder und/oder einer der Fahrzeugachsen zugeordnet. Insbesondere wird mit jedem der Höhenstand-Sensoren der Höhenstand im Bereich des ihm zugeordneten Fahrzeugrads und/oder der ihm zugeordneten Fahrzeugachse erfasst. Beispielsweise wird mit jedem der Höhenstand-Sensoren der Abstand des Fahrzeugaufbaus zu dem ihm zugeordneten Fahrzeugrad und/oder zu der ihm zugeordneten Fahrzeugachse erfasst. Vorteilhaft wird mit jedem der Höhenstand-Sensoren die Einfederung des ihm zugeordneten Fahrzeugrads und/oder der ihm zugeordneten Fahrzeugachse erfasst.

Der Höhenstand im Bereich jedes Fahrzeugrads ist insbesondere der Abstand zwischen dem jeweiligen Fahrzeugrad und dem Fahrzeugaufbau, vorzugsweise in Fahrzeughochrichtung. Der Höhenstand im Bereich jeder Fahrzeugachse ist beispielsweise der Abstand zwischen der jeweiligen Fahrzeugachse und dem Fahrzeugaufbau, vorzugsweise in Fahrzeughochrichtung.

Erfindungsgemäß besteht die Ladung aus einer oder mehreren Personen.

Erfindungsgemäß wird, insbesondere mittels der oder einer Auswerteeinheit, aus der Masse der Ladung und/oder aus der Änderung dieser Masse die Anzahl der Personen bestimmt. Vorzugsweise wird, insbesondere mittels der Auswerteeinheit, ein die Anzahl der Personen charakterisierendes Personensignal erzeugt und/oder bereitgestellt.

Erfindungsgemäß wird, insbesondere mittels der oder einer Ortungseinheit, der Ort des Fahrzeugs erfasst. Des Weiteren wird oder werden, insbesondere mittels der oder einer Speichereinheit, eine Straßenkarte und/oder eine Straßenkarte repräsentierende Karteninformationen gespeichert und/oder bereitgestellt. Zudem wird oder werden, insbesondere mittels der oder einer Zuordnungseinheit, die Masse der Ladung und die Anzahl der Personen und der Ort des Fahrzeugs mit der Straßenkarte und/oder mit den Karteninformationen verknüpft.

Die Erfindung wird nachfolgend anhand einer bevorzugten Ausführungsform unter Bezugnahme auf die Zeichnung erläutert. In der Zeichnung zeigen:
- Fig. 1: eine schematische Vorderansicht eines Fahrzeugs mit einer Ladungserfassungsvorrichtung gemäß einer Ausführungsform,
- Fig. 2: eine schematische Seitenansicht des Fahrzeugs,
- Fig. 3: eine schematische Draufsicht auf das Fahrzeug nach einem Ladevorgang und
- Fig. 4: eine schematische Ansicht der Ladungserfassungsvorrichtung.

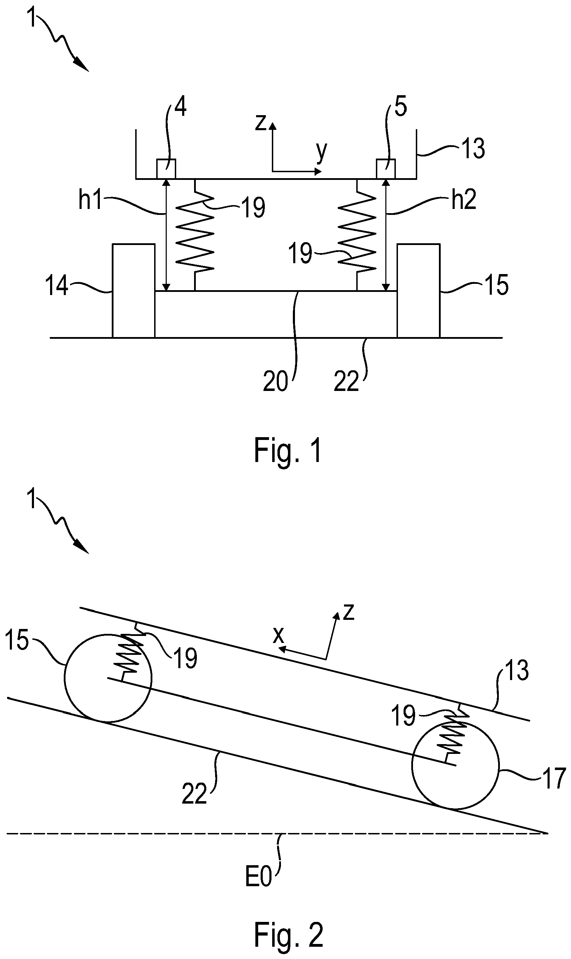

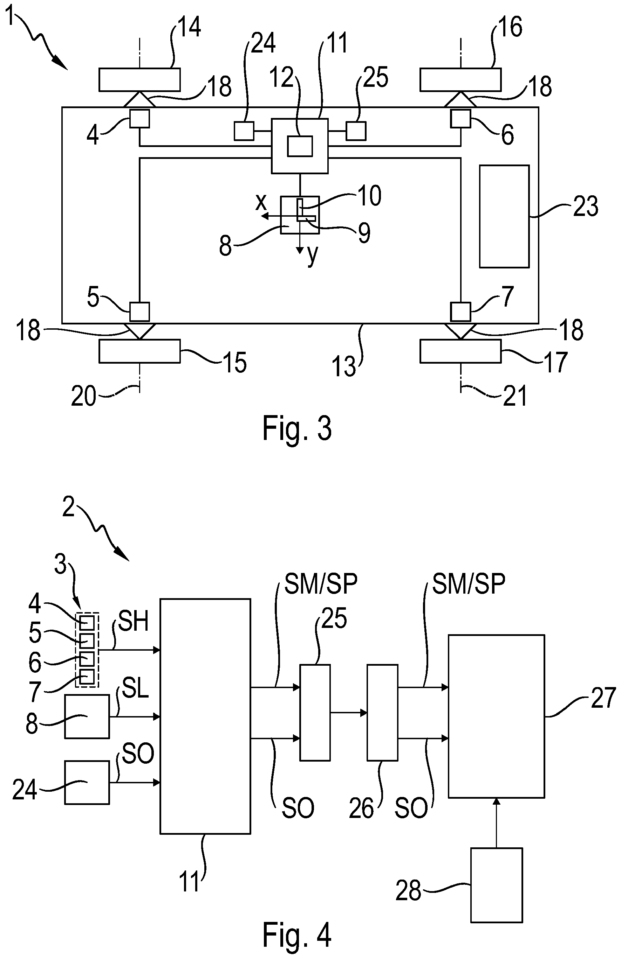

Aus den Fig. 1 bis 3 sind unterschiedliche schematische Ansichten eines Fahrzeugs 1 mit einer Ladungserfassungsvorrichtung 2 gemäß einer Ausführungsform ersichtlich, wobei die auch aus Fig. 4 ersichtliche Ladungserfassungseinrichtung 2 eine Höhenstand-Messeinheit 3 mit mehreren Höhenstand-Sensoren 4, 5, 6 und 7, eine Lage-Messeinheit 8 mit mehreren Beschleunigungssensoren 9 und 10 und eine Auswerteeinheit 11 mit einer zentralen Recheneinheit 12 umfasst. Das Fahrzeug 1 umfasst einen Fahrzeugaufbau 13 und vier Fahrzeugräder 14, 15, 16 und 17, die über Radaufhängungen 18 mit dem Fahrzeugaufbau 13 verbunden sind. Ferner sind die Fahrzeugräder 14, 15, 16 und 17 durch jeweils eine Fahrzeugfeder 19 an dem Fahrzeugaufbau 13 abgestützt. Das Fahrzeug 1 umfasst zwei Fahrzeugachsen 20 und 21, wobei die Fahrzeugräder 14 und 15 einer ersten der Fahrzeugachsen 20 und die Fahrzeugräder 16 und 17 einer zweiten der Fahrzeugachsen 21 zugeordnet sind. Jedem der Fahrzeugräder 14, 15, 16 und 17 ist einer der Höhenstand-Sensoren 4, 5, 6 und 7 zugeordnet, wobei der Höhenstand-Sensor 4 dem Fahrzeugrad 14, der Höhenstand-Sensor 5 dem Fahrzeugrad 15, der Höhenstand-Sensor 6 dem Fahrzeugrad 16 und der Höhenstand-Sensor 7 dem Fahrzeugrad 17 zugeordnet ist. Mit jedem der Höhenstand-Sensoren ist der Abstand des ihm zugeordneten Fahrzeugrads zum Fahrzeugaufbau 13 erfassbar, sodass die mit der Auswerteeinheit 11 verbundenen Höhenstand-Sensoren 4, 5, 6 und 7 den Höhenstand charakterisierende Höhenstandsignale SH bereitstellen und der Auswerteeinheit 11 zur Verfügung stellen.

Das Fahrzeug 1 steht mit seinen Fahrzeugrädern 14, 15, 16 und 17 auf einem Untergrund 22 auf. Ferner sind in den Fig. 1 bis 3 die Fahrzeuglängsrichtung x, die Fahrzeugquerrichtung y und die Fahrzeughochrichtung z durch Pfeile dargestellt. Dabei repräsentiert die Fahrzeuglängsrichtung x die Fahrzeuglängsachse, die Fahrzeugquerrichtung y die Fahrzeugquerachse und die Fahrzeughochrichtung z die Fahrzeughochachse.

Fig. 1 zeigt eine schematische Vorderansicht des Fahrzeugs 1, wobei die erste Fahrzeugachse 20 mit den Fahrzeugrädern 14 und 15 ersichtlich ist. Mittels des Höhenstand-Sensors 4 ist der Abstand h1 des Fahrzeugrads 14 zum Fahrzeugaufbau 13, insbesondere in Fahrzeughochrichtung z, erfassbar. Ferner ist mittels des Höhenstand-Sensors 5 der Abstand h2 des Fahrzeugrads 15 zum Fahrzeugaufbau 13, insbesondere in Fahrzeughochrichtung z, erfassbar. Entsprechend sind mittels des Höhenstand-Sensors 6 der Abstand des Fahrzeugrads 16 zum Fahrzeugaufbau 13 und mittels des Höhenstand-Sensors 7 der Abstand des Fahrzeugrads 17 zum Fahrzeugaufbau 13, insbesondere in Fahrzeughochrichtung z, erfassbar.

Fig. 2 zeigt eine schematische Seitenansicht des Fahrzeugs 1, sodass die Neigung des Untergrunds 22 gegenüber der Horizontalen E0 ersichtlich ist.

Fig. 3 zeigt eine schematische Draufsicht auf das Fahrzeug 1, welches mit einer Ladung 23 beaufschlagt ist. Würde das Fahrzeug 1 auf einem horizontalen Untergrund aufstehen, so könnte die Masse der Ladung 23 auf Basis der von der Höhenstand-Messeinheit 3 bereitgestellten Höhenstandsignale SH bestimmt werden. Die Neigung des Untergrunds 22 führt aber zu einer abweichenden Einfederung der Fahrzeugräder als bei einem horizontalen Untergrund, sodass eine Bestimmung der Masse der Ladung 23 allein auf Basis der Höhenstandsignale ungenau wäre.

Die Beschleunigungssensoren 9 und 10 sind insbesondere gleichartig aufgebaut aber in unterschiedlichen Raumrichtungen orientiert, wobei der Beschleunigungssensor 9 in Fahrzeuglängsrichtung x und der Beschleunigungssensor 10 in Fahrzeugquerrichtung y orientiert ist. Mittels der Beschleunigungssensoren 9 und 10 ist die Lage des Fahrzeugs 1 bezüglich des Erdmittelpunkts erfassbar. Ferner sind mittels der Beschleunigungssensoren 9 und 10 diese Lage charakterisierende Lagesignale SL bereitstellbar. Die Lage-Messeinheit 8 ist mit der Auswerteeinheit 11 verbunden, sodass die Lagesignale SL der Auswerteeinheit 11 zur Verfügung gestellt werden. Mittels der Auswerteeinheit 11 ist die Masse der Ladung 23 somit auf Basis der Höhenstandsignale SH und der Lagesignale SL bestimmbar und ein diese Masse charakterisierendes Massesignal SM erzeugbar. Handelt es sich bei dem Fahrzeug um ein Personenbeförderungsfahrzeug, kann mittels der Auswerteeinheit ferner die Anzahl der Personen berechnet und ein diese Anzahl charakterisierendes Personensignal SP erzeugt werden.

Bevorzugt umfasst die Auswerteeinheit 11 Analog-Digital-Wandler, mittels welchen die Höhenstandsignale SH und die Lagesignale SL digitalisierbar sind, welche dann in digitaler Form durch die Recheneinheit 12 verarbeitbar sind, welche insbesondere eine digitale Recheneinheit ist. Die Lage des Fahrzeugs 1 ist oder wird insbesondere durch eine durch die Fahrzeuglängsrichtung x und die Fahrzeugquerrichtung y aufgespannte Ebene repräsentiert, die insbesondere auch als x-y-Ebene bezeichnet wird.

Aus Fig. 3 ist eine mit der Auswerteeinheit 11 verbundene Ortungseinheit 24 ersichtlich, mittels welcher der Ort des Fahrzeugs 1 erfassbar und ein den Ort des Fahrzeugs charakterisierendes Ortssignal SO erzeugbar und an die Auswerteeinheit 11 abgebbar ist. Ferner ist eine mit der Auswerteeinheit 11 verbundene Sendeeinheit 25 vorhanden, mittels welcher das Massesignal SM und/oder das Personensignal SP und das Ortssignal SO an eine aus Fig. 4 ersichtliche Empfangseinheit 26 übermittelbar sind. Gemäß Fig. 4 ist die Empfangseinheit 26 mit einer Zuordnungseinheit 27 verbunden, die mit einer Speichereinheit 28 verbunden ist, in der eine Straßenkarte repräsentierende Karteninformationen gespeichert sind. Mittels der Zuordnungseinheit 27 sind die Masse der Ladung und/oder die Personenzahl und der Ort des Fahrzeugs 1 mit der Straßenkarte verknüpfbar.

### Bezugszeichen

- 1: Fahrzeug
- 2: Ladungserfassungsvorrichtung
- 3: Höhenstand-Messeinheit
- 4: Höhenstand-Sensor
- 5: Höhenstand-Sensor
- 6: Höhenstand-Sensor
- 7: Höhenstand-Sensor
- 8: Lage-Messeinheit
- 9: Beschleunigungssensor
- 10: Beschleunigungssensor
- 11: Auswerteeinheit
- 12: zentrale Recheneinheit
- 13: Fahrzeugaufbau
- 14: Fahrzeugrad
- 15: Fahrzeugrad
- 16: Fahrzeugrad
- 17: Fahrzeugrad
- 18: Radaufhängung
- 19: Fahrzeugfeder
- 20: Fahrzeugachse
- 21: Fahrzeugachse
- 22: Untergrund
- 23: Ladung
- 24: Ortungseinheit
- 25: Sendeeinheit
- 26: Empfangseinheit
- 27: Zuordnungseinheit
- 28: Speichereinheit

- E0: Horizontale
- h1: Abstand
- h2: Abstand
- SH: Höhenstandsignal
- SL: Lagesignal
- SM: Massesignal
- SO: Ortssignal
- SP: Personensignal
- x: Fahrzeuglängsrichtung
- y: Fahrzeugquerrichtung
- z: Fahrzeughochrichtung

## Patentansprüche

1. Ladungserfassungsvorrichtung mit einer Höhenstand-Messeinheit (3), mittels welcher der Höhenstand eines Fahrzeugs (1) erfassbar und wenigstens ein den Höhenstand charakterisierendes Höhenstandsignal (SH) bereitstellbar ist, und einer mit der Höhenstand-Messeinheit (3) verbundenen Auswerteeinheit (11), mittels welcher die Masse einer Ladung (23) des Fahrzeugs (1) unter Berücksichtigung des Höhenstandsignals (SH) bestimmbar ist, und mit einer Lage-Messeinheit (8), mittels welcher die Lage des Fahrzeugs (1) bezüglich des Erdmittelpunkts erfassbar und wenigstens ein diese Lage charakterisierendes Lagesignal (SL) bereitstellbar ist, wobei mittels der Auswerteeinheit (11), die zusätzlich mit der Lage-Messeinheit (8) verbunden ist, die Masse der Ladung zusätzlich unter Berücksichtigung des Lagesignals (SL) bestimmbar ist, **dadurch gekennzeichnet, dass** die Ladung (23) aus einer oder mehreren Personen besteht, und mittels der Auswerteeinheit (11) aus der Masse der Ladung die Anzahl der Personen bestimmbar ist, und mit einer Ortungseinheit (24), mittels welcher der Ort des Fahrzeugs (1) erfassbar ist, einer Speichereinheit (28), in der eine Straßenkarte repräsentierende Karteninformationen gespeichert sind, und einer Zuordnungseinheit (27), mittels welcher die Anzahl der Personen und der Ort des Fahrzeugs mit der Straßenkarte verknüpfbar sind.

2. Ladungserfassungsvorrichtung nach Anspruch 1, **dadurch gekennzeichnet, dass** die Lage des Fahrzeugs (1) bezüglich des Erdmittelpunkts durch die Lage einer durch die Fahrzeuglängsachse (x) und die Fahrzeugquerachse (y) aufgespannten Fahrzeugebene bezüglich des Erdmittelpunkts gegeben ist.

3. Ladungserfassungsvorrichtung nach Anspruch 1 oder 2, **dadurch gekennzeichnet, dass** die Lage-Messeinheit (8) ein oder mehrere Beschleunigungssensoren (9, 10) umfasst.

4. Ladungserfassungsvorrichtung nach einem der vorangehenden Ansprüche, **dadurch gekennzeichnet, dass** die Höhenstand-Messeinheit (3) ein oder mehrere Höhenstand-Sensoren (4, 5, 6, 7) umfasst.

5. Ladungserfassungsvorrichtung nach einem der vorangehenden Ansprüche, **dadurch gekennzeichnet, dass** das Fahrzeug (1) mehrere Fahrzeugräder (14, 15, 16, 17) umfasst und jeder der Höhenstand-Sensoren einem der Fahrzeugräder zugeordnet ist.

6. Verfahren zur Ladungserfassung eines Fahrzeugs, wobei mittels einer Höhenstand-Messeinheit (3) ein Höhenstand des Fahrzeugs (1) erfasst und wenigstens ein den Höhenstand charakterisierendes Höhenstandsignal (SH) bereitgestellt wird, unter dessen Berücksichtigung die Masse einer Ladung (23) des Fahrzeugs (1) bestimmt wird, wobei mittels einer Lage-Messeinheit (8) eine Lage des Fahrzeugs (1) bezüglich des Erdmittelpunkts erfasst und wenigstens ein diese Lage charakterisierendes Lagesignal (SL) bereitgestellt wird, und die Masse der Ladung (23) zusätzlich unter Berücksichtigung des Lagesignals (SL) bestimmt wird, **dadurch gekennzeichnet, dass** die Ladung (23) aus einer oder mehreren Personen besteht und aus der Masse der Ladung (23) die Anzahl der Personen bestimmt wird, wobei bei der Bestimmung der Masse der Ladung (23) der Ort des Fahrzeugs (1) erfasst wird, eine Straßenkarte repräsentierende Karteninformationen bereitgestellt werden und die Anzahl der Personen und der Ort des Fahrzeugs (1) mit der Straßenkarte verknüpft werden.

7. Verfahren nach Anspruch 6, **dadurch gekennzeichnet, dass** die Lage des Fahrzeugs (1) bezüglich des Erdmittelpunkts durch die Lage einer durch die Fahrzeuglängsachse (x) und die Fahrzeugquerachse (y) aufgespannten Fahrzeugebene bezüglich des Erdmittelpunkts gegeben ist.

8. Verfahren nach Anspruch 6 oder 7, **dadurch gekennzeichnet, dass** die Lage-Messeinheit (8) ein oder mehrere Beschleunigungssensoren (9, 10) umfasst.

9. Verfahren nach einem der Ansprüche 6 bis 8, **dadurch gekennzeichnet, dass** die Höhenstand-Messeinheit (3) ein oder mehrere Höhenstand-Sensoren (4, 5, 6, 7) umfasst.

10. Verfahren nach einem der Ansprüche 6 bis 9, **dadurch gekennzeichnet, dass** das Fahrzeug (1) mehrere Fahrzeugräder (14, 15, 16, 17) umfasst und jeder der Höhenstand-Sensoren einem der Fahrzeugräder zugeordnet ist.

## Claims

1. Load detection device having a ride height measuring unit (3), by means of which the ride height of a vehicle (1) can be detected and at least one ride height signal (SH) characterizing the ride height can be provided, and an evaluation unit (11), which is connected to the ride height measuring unit (3) and by means of which the mass of a load (23) of the vehicle (1) can be determined while taking account of the ride height signal (SH), and having a position measuring unit (8), by means of which the position of the vehicle (1) with respect to the centre of the earth can be detected and at least one position signal (SL) characterizing this position can be provided, wherein, by means of the evaluation unit (11), which is additionally connected to the position measuring unit (8), the mass of the load can additionally be determined while taking account of the position signal (SL),
**characterized in that** the load (23) consists of one or more persons and the number of persons can be determined from the mass of the load by means of the evaluation unit (11), and having a location unit (24), by means of which the location of the vehicle (1) can be detected, a storage unit (28), in which map information representing a road map is stored, and an association unit (27), by means of which the number of persons and the location of the vehicle can be linked with the road map.

2. Load detection device according to Claim 1, **characterized in that** the position of the vehicle (1) with respect to the centre of the earth is given by the position with respect to the centre of the earth of a vehicle plane spanned by the vehicle longitudinal axis (x) and the vehicle transverse axis (y).

3. Load detection device according to Claim 1 or 2, **characterized in that** the position measuring unit (8) comprises one or more acceleration sensors (9, 10).

4. Load detection device according to one of the preceding claims, **characterized in that** the ride height measuring unit (3) comprises one or more ride height sensors (4, 5, 6, 7) .

5. Load detection device according to one of the preceding claims, **characterized in that** the vehicle (1) comprises a plurality of vehicle wheels (14, 15, 16, 17), and each of the ride height sensors is associated with one of the vehicle wheels.

6. Method for detecting the load of a vehicle, wherein a ride height of the vehicle (1) is detected by means of a ride height measuring unit (3) and at least one ride height signal (SH) characterizing the ride height is provided, and the mass of a load (23) of the vehicle (1) is determined while taking account of this signal, wherein a position of the vehicle (1) with respect to the centre of the earth is detected by means of a position measuring unit (8) and at least one position signal (SL) characterizing this position is provided, and the mass of the load (23) is additionally determined while taking account of the position signal (SL), **characterized in that** the load (23) consists of one or more persons and the number of persons is determined from the mass of the load (23), wherein the location of the vehicle (1) is determined during the determination of the mass of the load (23), map information representing a road map is provided, and the number of persons and the location of the vehicle (1) are linked with the road map.

7. Method according to Claim 6, **characterized in that** the position of the vehicle (1) with respect to the centre of the earth is given by the position with respect to the centre of the earth of a vehicle plane spanned by the vehicle longitudinal axis (x) and the vehicle transverse axis (y).

8. Method according to Claim 6 or 7, **characterized in that** the position measuring unit (8) comprises one or more acceleration sensors (9, 10).

9. Method according to one of Claims 6 to 8, **characterized in that** the ride height measuring unit (3) comprises one or more ride height sensors (4, 5, 6, 7).

10. Method according to one of Claims 6 to 9, **characterized in that** the vehicle (1) comprises a plurality of vehicle wheels (14, 15, 16, 17) and each of the ride height sensors is associated with one of the vehicle wheels.

## Revendications

1. Dispositif de détection de charge comportant une unité de mesure de niveau de hauteur (3), au moyen de laquelle le niveau de hauteur d'un véhicule (1) peut être détecté et au moins un signal de niveau de hauteur (SH) caractérisant le niveau de hauteur peut être fourni, et une unité d'évaluation (11) reliée à l'unité de mesure de niveau de hauteur (3), unité d'évaluation au moyen de laquelle la masse d'une charge (23) du véhicule (1) peut être déterminée en tenant compte du signal de niveau de hauteur (SH), et une unité de mesure de position (8), au moyen de laquelle la position du véhicule (1) par rapport au centre de la Terre peut être détectée et au moins un signal de position (SL) caractérisant cette position peut être fourni, dans lequel, au moyen de l'unité d'évaluation (11), qui est reliée en outre à l'unité de mesure de position (8), la masse de la charge peut être déterminée en outre en tenant compte du signal de position (SL), **caractérisé en ce que** la charge (23) est constituée d'une ou plusieurs personnes et, au moyen de l'unité d'évaluation (11), le nombre de personnes peut être déterminé à partir de la masse de la charge, et comportant une unité de localisation (24), au moyen de laquelle l'emplacement du véhicule (1) peut être détecté, une unité de mémoire (28), dans laquelle des informations de carte représentant une carte routière sont mémorisées, et une unité d'association (27), au moyen de laquelle le nombre de personnes et l'emplacement du véhicule peuvent être liés à la carte routière.

2. Dispositif de détection de charge selon la revendication 1, **caractérisé en ce que** la position du véhicule (1) par rapport au centre de la Terre est donnée par la position d'un plan de véhicule défini par l'axe longitudinal du véhicule (x) et l'axe transversal du véhicule (y) par rapport au centre de la Terre.

3. Dispositif de détection de charge selon la revendication 1 ou 2, **caractérisé en ce que** l'unité de mesure de position (8) comprend un ou plusieurs capteurs d'accélération (9, 10).

4. Dispositif de détection de charge selon l'une des revendications précédentes, **caractérisé en ce que** l'unité de mesure de niveau de hauteur (3) comprend un ou plusieurs capteurs de niveau de hauteur (4, 5, 6, 7).

5. Dispositif de détection de charge selon l'une des revendications précédentes, **caractérisé en ce que** le véhicule (1) comprend plusieurs roues de véhicule (14, 15, 16, 17) et chacun des capteurs de niveau de hauteur est associé à l'une des roues de véhicule.

6. Procédé de détection de charge d'un véhicule, dans lequel, au moyen d'une unité de mesure de niveau de hauteur (3), un niveau de hauteur du véhicule (1) est détecté et au moins un signal de niveau de hauteur (SH) caractérisant le niveau de hauteur est fourni, signal de niveau de hauteur en tenant compte duquel la masse d'une charge (23) du véhicule (1) est déterminée, dans lequel au moyen d'une unité de mesure de position (8) une position du véhicule (1) par rapport au centre de la Terre est détectée et au moins un signal de position (SL) caractérisant cette position est fourni, et la masse de la charge (23) est déterminée en outre en tenant compte du signal de charge (SL), **caractérisé en ce que** la charge (23) est constituée d'une ou plusieurs personnes, et le nombre de personnes est déterminé à partir de la masse de la charge (23), l'emplacement du véhicule (1) étant détecté lors de la détermination de la masse de la charge (23), des informations de carte représentant une carte routière étant fournies, et le nombre de personnes et l'emplacement du véhicule (1) étant liés à la carte routière.

7. Procédé selon la revendication 6, **caractérisé en ce que** la position du véhicule (1) par rapport au centre de la Terre est donnée par la position d'un plan de véhicule défini par l'axe longitudinal du véhicule (x) et l'axe transversal du véhicule (y) par rapport au centre de la Terre.

8. Procédé selon la revendication 6 ou 7, **caractérisé en ce que** l'unité de mesure de position (8) comprend un ou plusieurs capteurs d'accélération (9, 10).

9. Procédé selon l'une des revendications 6 à 8, **caractérisé en ce que** l'unité de mesure de niveau de hauteur (3) comprend un ou plusieurs capteurs de niveau de hauteur (4, 5, 6, 7).

10. Procédé selon l'une des revendications 6 à 9, **caractérisé en ce que** le véhicule (1) comprend plusieurs roues de véhicule (14, 15, 16, 17) et chacun des capteurs de niveau de hauteur est associé à l'une des roues de véhicule.
